# FASCICULE DE BREVET EUROPEEN

(11) **EP 1 867 232 B1**
(45) Date de publication et mention de la délivrance du brevet: **09.04.2014**
(21) Numéro de dépôt: 06012475.7
(22) Date de dépôt: 18.06.2006
(51) Int. Cl.: A21C 7/01, A21C 3/02

(54) **Dispositif de façonnage de pâtons de pâte alimentaire**
Vorrichtung zum Formen von Teiglingen.
Device for moulding dough pieces.

(43) Date de publication de la demande: 19.12.2007
(73) Titulaire: Jac s.a., 4000 Sclessin-Liège (BE)
(72) Inventeur: Van Cauwenberghe, Baudoin, 1652 Beersel (BE)
(74) Mandataire: Mille, Eric

(56) Documents cités:
- CH-A- 325 442
- CH-A- 522 361
- FR-A1- 2 788 936
- FR-A1- 2 822 025
- GB-A- 595 504
- GB-A- 763 263
- US-A- 1 653 211

## Description

La présente invention se rapporte à un dispositif de façonnage de pâte alimentaire en pâtons et plus particulièrement à un tel dispositif destiné au façonnage de pâtons de pâte à pain en galettes ou baguettes.

De tels dispositifs sont connus de l'état de la technique et comprennent généralement, fixés à un bâti ou cadre du dispositif, un moyen de chargement du pâton dans le dispositif, généralement constitué d'une tuyère sensiblement conique, au moins un premier et un deuxième cylindres de laminage disposés sensiblement parallèlement l'un à l'autre et agencés pour être entraînés dans un mouvement de rotation en sens inverse l'un de l'autre par un premier moteur rotatif dont l'axe d'entraînement est couplé aux premier et deuxième cylindres par un premier moyen de couplage, tel qu'une ou plusieurs courroies ou chaînes coopérant avec un ou plusieurs paliers ou roues dentées, lesdits premiers et deuxième cylindres étant agencés pour laminer le pâton en une galette. Davantage de cylindres de laminage peuvent être prévus, tel que par exemple trois ou quatre cylindres, agencés pour aplanir progressivement le pâton. Un tel dispositif comprend encore généralement un premier moyen de roulage de la galette sortant des cylindres de laminage en une baguette, comprenant un premier tapis formant une boucle autour de deux premiers rouleaux disposés sensiblement parallèlement aux premier et deuxième cylindres, l'un au moins des deux premiers rouleaux étant entraîné dans un mouvement de rotation par un deuxième moteur, le premier moyen de roulage comprenant en outre un élément de roulage disposée sensiblement parallèlement au premier tapis à une distance choisie de celui-ci et entre ce dernier et les premier et deuxième cylindres. Cet élément de roulage peut prendre la forme d'une plaque sensiblement plane, d'un treillis également sensiblement plan ou d'un rideau constitué de baguettes rigides sous lesquelles passe la galette de pâte et qui alors reposent sur elle. Le principe de fonctionnement de tels moyens de roulage est de retenir une extrémité de la galette lorsqu'elle est déplacée par le premier tapis en direction dudit moyen, de sorte que, ce déplacement se poursuivant, ladite galette s'enroule sur elle-même entre le tapis et le moyen de roulage, pour former une baguette généralement cylindrique. A l'issu de ce formage en baguette, celle-ci est généralement transportée par le premier tapis jusqu'à un second tapis formant une boucle autour de deux seconds rouleaux agencés pour que le second tapis soit disposé sensiblement parallèlement au premier et pour être entraînés dans un mouvement de rotation en sens inverse de celui des deux premiers rouleaux. La baguette passe ainsi entre les deux tapis et peut de la sorte être affinée et sa forme rendue plus régulière. Après cette deuxième opération de roulage, la baguette ainsi façonnée aboutit à une rampe de sortie du dispositif, éventuellement pourvue d'un tapis de transport vers l'extérieur dudit dispositif.

Un tel dispositif convient parfaitement pour la réalisation de baguettes. Cependant, il n'est pas conçu pour pouvoir en extraire les galettes de pâtes obtenues après l'opération de laminage des pâtons et avant leur façonnage en baguettes par enroulement sur elles-mêmes desdites galettes entre le premier tapis et le moyen d'enroulement susmentionnés. Ceci constitue un désavantage des dispositifs en question et pose un problème de polyvalence de ces derniers. Il est en effet souhaitable de pouvoir obtenir facilement au moyen d'un même dispositif de façonnage, soit des galettes soit des baguettes de pâte, selon les exigences de la production en cours.

La demande de brevet GB 595 504 A décrit un dispositif selon le préambule de la revendication 1 comprenant un moyen d'orientation du pâton façonné vers la sortie du dispositif, agencé pour permettre cette sortie à la fois lorsque le pâton a reçu la forme d'une galette et lorsqu'il a reçu celle d'une baguette. Ce moyen d'orientation consiste à introduire manuellement dans le dispositif décrit une plaque de récolte d'une galette obtenue après laminage du pâton par les cylindres de ce dispositif. Un tel dispositif pose cependant le problème d'être peu pratique en ce qu'il demande que la plaque en question soit introduite manuellement dans le dispositif à chaque fois que l'on souhaite en extraire une galette plutôt qu'une baguette.

La présente invention résout ce problème en proposant un dispositif de façonnage tel que décrit ci-dessus, mais dans lequel soit le moyen d'orientation comprend un élément d'inversion du sens de rotation de l'un au moins des deux premiers rouleaux, soit le dispositif comprend un troisième cylindre agencé pour poursuivre le laminage de la galette après le passage du pâton entre les premier et deuxième cylindres et le moyen d'orientation comprend un premier palier et un couple de seconds paliers, les seconds paliers étant agencés pour que la rotation de l'un entraîne celle de l'autre en sens inverse, le premier palier et le couple de second paliers étant chacun agencé pour être déplacé entre une première position de repos respective et une seconde position respective dans laquelle il transmet la rotation de l'axe du premier moteur au troisième cylindre.

Grâce au moyen d'orientation selon l'invention, il est possible, selon les exigences de la production, d'obtenir facilement soit des galettes de soit des baguettes de pâte, et ce sans aucune interruption du fonctionnement du dispositif et donc aucune baisse de productivité ainsi que sans devoir introduire manuellement dans le dispositif aucune plaque ou autre élément destiné à récolter des galettes plutôt que des baguettes façonnées par le dispositif. Ceci confère au dispositif selon l'invention une facilité d'utilisation qui faisait défaut aux dispositifs de façonnage de pâtons de pâte alimentaire selon l'état de la technique.

L'invention va à présent être décrite plus en détail à travers deux modes de réalisation non limitatifs de la portée de ladite invention, illustrés aux figures jointes, dans lesquelles,
Les figures 1a et 1b représentent en coupe transversale un dispositif selon un premier mode de réalisation de l'invention,
les figures 2a et 2b représentent en coupe transversale un dispositif selon un deuxième mode de réalisation de l'invention.

Les éléments homologues du dispositif sont désignés dans chaque figure par des numéros de référence identiques,

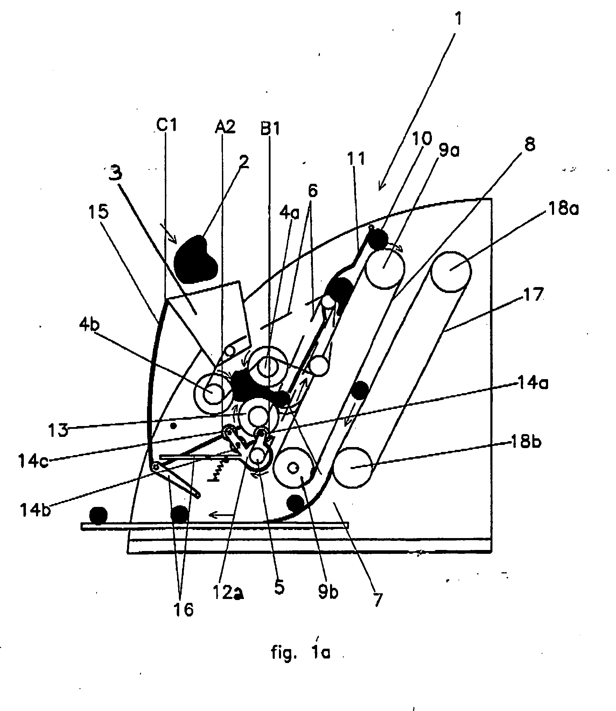

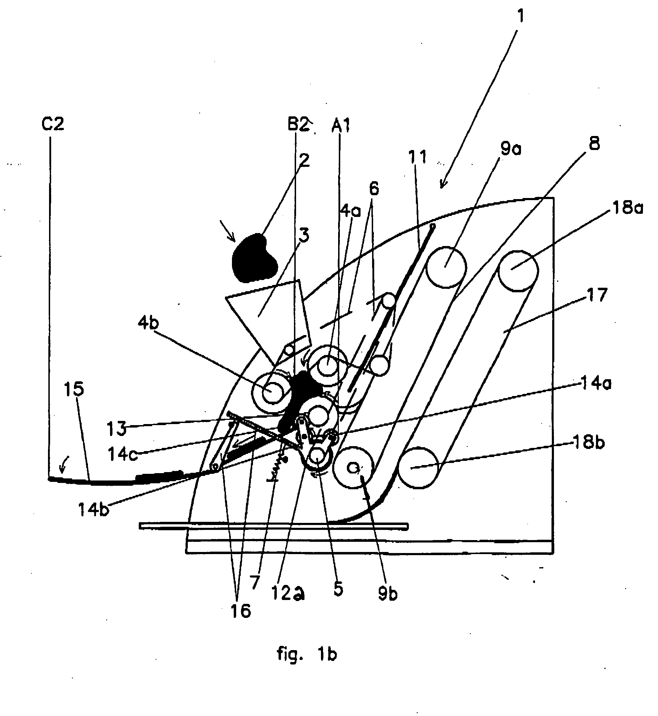

Les figures 1a et 1b ainsi que 2a et 2b illustrent un dispositif 1 de façonnage de pâtons 2 de pâte alimentaire, comprenant un moyen 3 de chargement du pâton dans le dispositif, un premier et un deuxième cylindres 4a, 4b de laminage disposés sensiblement parallèlement l'un à l'autre et agencés pour être entraînés dans un mouvement de rotation en sens inverse l'un de l'autre par un premier moteur rotatif (non représenté) dont l'axe d'entraînement 5 est couplé aux premier et deuxième cylindres 4a, 4b par un premier moyen de couplage 6 constitués dans le mode de réalisation illustré de deux courroies représentées en pointillés et de trois paliers, coopérant avec les deux premiers cylindres et avec un troisième cylindre 13 prévu dans le dispositif et agencé pour poursuivre le laminage de la galette après le passage du pâton entre les premier et deuxième cylindres 4a, 4b et pour être entraîné dans un mouvement de rotation par un moteur d'entraînement, constitué en l'espèce dudit premier moteur, étant entendu qu'il pourrait également s'agir dans un autre mode de réalisation de l'invention, d'un moteur distinct. Lesdits premiers et deuxième cylindres 4a, 4b sont agencés pour laminer le pâton en une galette 7, dont l'épaisseur peut être ajustée en prévoyant dans le dispositif un moyen de réglage (non représenté) de l'écartement des premier et deuxième cylindres. Le dispositif comprend encore un premier moyen de roulage de la galette en une baguette, comprenant un premier tapis 8 formant une boucle autour de deux premiers rouleaux 9a, 9b disposés sensiblement parallèlement aux premier et deuxième cylindres 4a, 4b, l'un au moins des deux premiers rouleaux 9a, 9b étant entraîné dans un mouvement de rotation par un deuxième moteur (non représenté), le premier moyen de roulage comprenant en outre un élément de roulage 11 disposé sensiblement parallèlement au premier tapis 8 à une distance choisie de celui-ci et entre ce dernier et les premier et deuxième cylindres 4a, 4b, cet élément de roulage 11 étant constitué dans la forme de réalisation de l'invention illustrée d'un rideau de baguettes métalliques dont les extrémités les plus éloignées des galettes lorsqu'elles sortent des cylindres de laminage sont agencées pour pivoter autour d'un axe de sorte à reposer sur les galettes lors de leur transport par le premier tapis 8. Le dispositif comprend en outre un moyen 12a, 12b d'orientation du pâton façonné vers la sortie du dispositif, agencé pour permettre cette sortie à la fois lorsque le pâton a reçu la forme d'une galette et lorsqu'il a reçu celle d'une baguette. Le dispositif illustré comprend en outre un second tapis 17 formant une boucle autour de deux seconds rouleaux 18a, 18b agencés pour que le second tapis 17 soit disposé sensiblement parallèlement au premier tapis 8 et pour être entraînés dans un mouvement de rotation en sens inverse de celui des deux premiers rouleaux 9a, 9b.

Dans la forme de réalisation de l'invention illustrée aux figures 1 a et 1 b, le moyen d'orientation 12a comprend un premier palier 14a et un couple de seconds paliers 14b, 14c, les seconds paliers 14b, 14c étant agencés pour que la rotation de l'un entraîne celle de l'autre en sens inverse, le premier palier 14a et le couple de second paliers 14b, 14c étant chacun agencé pour être déplacé entre une première position de repos respective A1, A2 et une seconde position respective B1, B2 dans laquelle il transmet la rotation de l'axe 5 du premier moteur au troisième cylindre 13. Le premier palier 14a et le couple de second paliers 14b, 14c sont solidaires l'un de l'autre et agencés pour qu'à la première position A1, A2 de l'un corresponde la seconde position B1, B2 de l'autre, le premier palier 14a et le couple de seconds paliers 14b, 14c étant agencés pour être déplacés entre leur première A1, A2 et leur seconde B1, B2 position respectives par pivotement, ce déplacement pouvant également, dans une autre forme de réalisation de l'invention, être effectué par translation. Le dispositif comprend également un plateau 15 de sortie du dispositif des pâtons façonnés en galettes, agencé pour être déplacé par pivotement entre une première position C1 de repos sensiblement verticale et une seconde position C2 de sortie desdites galettes du dispositif, sensiblement horizontale et pour entraîner lors de ce déplacement - via un deuxième moyen de couplage 16 constitué dans la forme de réalisation illustrée, d'un levier solidaire du plateau 15 et d'un bras solidaire des premier palier 14a et du couple de seconds paliers 14b, 14c - le déplacement du premier palier 14a et du couple de second paliers 14b, 14c entre leur première A1, A2 et leur seconde B1, B2 positions respectives,

Lors du fonctionnement du dispositif, lorsqu'il est désiré de façonner des baguettes, le couvercle 15 est maintenu dans sa position C1 de repos et le premier palier 14a du moyen d'orientation 12a dans sa deuxième position B1 transmet alors le mouvement de rotation de l'axe 5 du premier moteur au, troisième cylindre 13, le couple de second paliers 14b, 14c étant quant à lui maintenu dans sa première position de repos A2. De la sorte, les pâtons laminés une première fois entre les premier et deuxième cylindres 4a et 4b le sont une seconde entre le premier cylindre 4a et le troisième cylindre 13 et la galette obtenue à l'issu de ce second laminage émerge desdits premier 4a et troisième 13 cylindres face au premier tapis 8. Elle est alors entraînée par celui-ci en direction de l'élément de roulage 11, entre lequel élément et le premier tapis 8 elle s'enroule sur elle-même en une baguette, entraînée ensuite entre le premier et le second tapis pour un façonnage complémentaire de la baguette puis vers la sortie du dispositif. Ce parcours est représenté par les flèches apparaissant dans la figure 1a. Si en cours de fonctionnement il est souhaité d'obtenir non plus des baguettes de pâte mais des galettes, il suffit de rabattre le couvercle 15 dans sa position sensiblement horizontale C2, ce qui entraîne le pivotement du moyen d'orientation 12a via le deuxième moyen de couplage 16 de sorte que le premier palier 14a pivote de sa deuxième position B1 à sa première position de repos A1 et que le couple de second paliers 14b, 14c pivote de sa première position de repos A2 vers sa deuxième position B2 dans laquelle il entraîne le troisième cylindre 13 en sens inverse de son mouvement de rotation initial. De la sorte, les pâtons laminés une première fois entre les premier et deuxième cylindres 4a et 4b le sont une seconde entre le deuxième cylindre 4b et le troisième cylindre 13 et la galette obtenue à l'issu de ce second laminage émerge desdits deuxième 4b et troisième 13 cylindres face au plateau 15, directement vers la sortie du dispositif, sans passer par une étape de façonnage en baguette via les premier 8 et second 17 tapis. Ce parcours est représenté par les flèches figurant dans la figure 1 b.

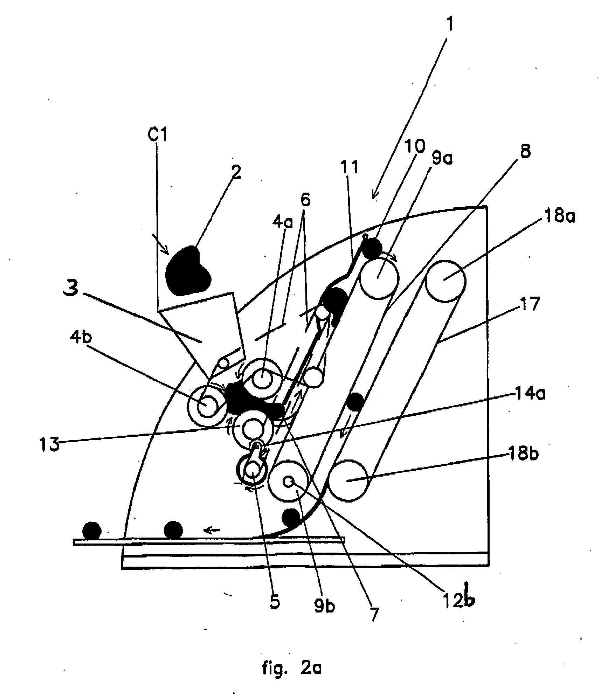

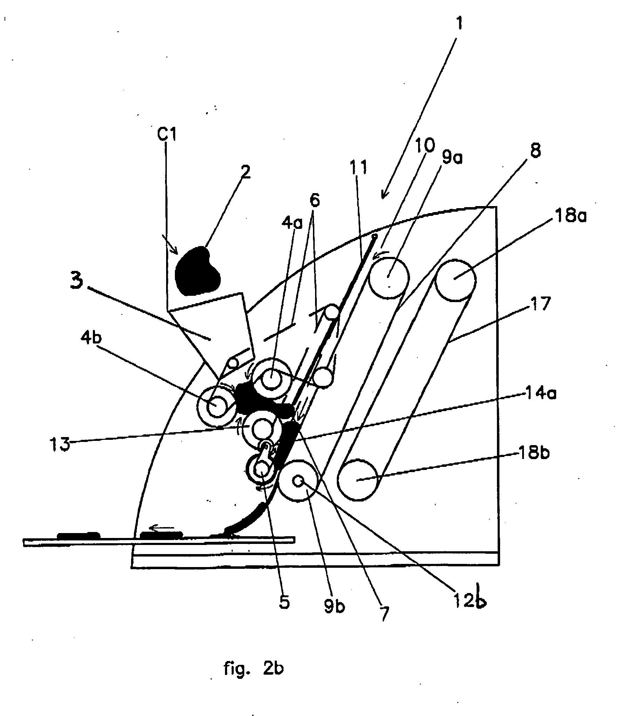

Dans la forme de réalisation de l'invention illustrée aux figures 2a et 2b, le moyen d'orientation 12b d'un pâton façonné comprend un élément d'inversion (non représenté) du sens de rotation des deux premiers rouleaux 9a, 9b. Cet élément est en l'espèce constitué d'un commutateur d'inversion de la tension appliquée au deuxième moteur, dont l'axe est commun avec celui de l'un 9b des premiers rouleaux 9a, 9b. Alternativement, ce moyen 12b peut être similaire à celui décrit relativement à la forme de réalisation représentée aux figures 1 a et 1 b mais en étant agencé pour pouvoir inverser le sens de rotation de l'un des premiers rouleaux 9a, 9b au lieu de celui du troisième cylindre de laminage 13, ainsi que c'est le cas dans la forme de réalisation représentée auxdites figures 1 a et 1 b. Dans la forme de réalisation de l'invention représentée aux figures 2a et 2b, le troisième cylindre 13 est entraîné dans son mouvement de rotation par le premier moteur, via un premier palier 14a seul, coopérant avec l'axe 5 du premier moteur et ledit troisième cylindre.

Lors du fonctionnement du dispositif, lorsqu'il est désiré de façonner des baguettes, la rotation du premier rouleau 9b est maintenue dans le sens horlogique. De la sorte, les pâtons sont laminés une première fois entre les premier et deuxième cylindres 4a et 4b et une seconde entre le premier cylindre 4a et le troisième cylindre 13 et la galette obtenue à l'issu de ce second laminage émerge desdits premier 4a et troisième 13 cylindres face au premier tapis 8. Elle est alors entraînée par celui-ci en direction de l'élément de roulage 11, entre lequel élément et le premier tapis 8 elle s'enroule sur elle-même en une baguette, entraînée ensuite entre le premier et le second tapis pour un façonnage complémentaire de la baguette puis vers la sortie du dispositif. Ce parcours est représenté par les flèches apparaissant dans la figure 2a. Si en cours de fonctionnement il est souhaité d'obtenir non plus des baguettes de pâte mais des galettes, il suffit d'inverser le sens de rotation du premier rouleau 9b via l'inversion de celui de l'axe du deuxième moteur, Dès lors, la galette obtenue à l'issu du second laminage du pâton entre le premier cylindre 4a et le troisième cylindre 13 est entraînée par le premier tapis 8 directement vers la sortie du dispositif et non pas en sens inverse vers le premier moyen de roulage de la galette en baguette. Ce parcours est représenté par les flèches figurant dans la figure 2b.

L'on voit donc que le dispositif selon l'invention permet aisément d'obtenir des pâtons façonnés en galettes ou en baguettes, sans interruption du fonctionnement du dispositif ainsi que sans devoir introduire manuellement dans le dispositif aucune plaque ou autre élément destiné à récolter des galettes plutôt que des baguettes façonnées par le dispositif, lequel présente dès lors une facilité d'utilisation qui faisait défaut aux dispositifs selon l'état de la technique.

## Revendications

1. Dispositif (1) de façonnage de pâtons (2) de pâte alimentaire, comprenant un moyen (3) de chargement du pâton dans le dispositif, au moins un premier et un deuxième cylindres (4a, 4b) de laminage disposés sensiblement parallèlement l'un à l'autre et agencés pour être entraînés dans un mouvement de rotation en sens inverse l'un de l'autre par un premier moteur rotatif dont l'axe d'entraînement (5) est couplé aux premier et deuxième cylindres (4a, 4b) par un premier moyen de couplage (6), lesdits premier et deuxième cylindres (4a, 4b) étant agencés pour laminer le pâton en une galette (7), le dispositif comprenant encore un premier moyen de roulage de la galette en une baguette, comprenant un premier tapis (8) formant une boucle autour de deux premiers rouleaux (9a, 9b),
disposés sensiblement parallèlement aux premier et deuxième cylindres (4a, 4b), l'un au moins des deux premiers rouleaux (9a, 9b) étant entraîné dans un mouvement de rotation par un deuxième moteur, le premier moyen de roulage comprenant en outre un élément de roulage (11) disposé sensiblement parallèlement au premier tapis (8) à une distance choisie de celui-ci et entre ce dernier et les premier et deuxième cylindres (4a, 4b); le dispositif comprenant en outre un moyen (12a, 12b) d'orientation du pâton façonné vers la sortie du dispositif, agencé pour permettre cette sortie à la fois lorsque le pâton a reçu la forme d'une galette et lorsqu'il a reçu celle d'une baguette; **caractérisé en ce que**
soit ledit moyen d'orientation (12b) comprend un élément d'inversion du sens de rotation de l'un au moins des deux premiers rouleaux (9a, 9b),
soit le dispositif comprend un troisième cylindre (13) agencé pour poursuivre le laminage de la galette après le passage du pâton entre les premier et deuxième cylindres et le moyen d'orientation (12a) comprend un premier palier (14a) et un couple de seconds paliers (14b, 14c), les seconds paliers (14b, 14c) étant agencés pour que la rotation de l'un entraîne celle de l'autre en sens inverse, le premier palier (14a) et le couple de second paliers (14b, 14c) étant chacun agencé pour être déplacé entre une première position de repos respective (A1, A2) et une seconde position respective (B1, B2) dans laquelle il transmet la rotation de l'axe (5) du premier moteur au troisième cylindre.

2. Dispositif selon la revendication 1, **caractérisé en ce que** le premier palier (14a) et le couple de seconds paliers (14b, 14c) sont solidaires l'un de l'autre et agencés pour qu'à la première position (A1, A2) de l'un corresponde la seconde position (B1, B2) de l'autre.

3. Dispositif selon la revendication 2, **caractérisé en ce que** le premier palier (14a) et le couple de seconds paliers (14b, 14c) sont agencés pour être déplacés entre leur première (A1, A2) et leur seconde (B1, B2) positions respectives par pivotement.

4. Dispositif selon l'une des revendications 2 ou 3, **caractérisé en ce qu'**il comprend un plateau (15) de sortie du dispositif des pâtons façonnés en galettes, agencé pour être déplacé par pivotement entre une première position (C1) de repos sensiblement verticale et une seconde position (C2) de sortie desdites galettes du dispositif, sensiblement horizontale et pour entraîner lors de ce déplacement, via un deuxième moyen de couplage (16), le déplacement du premier palier (14a) et du couple de second paliers (14b, 14c) entre leur première (A1, A2) et leur seconde (B1, B2) positions respectives.

5. Dispositif selon l'une quelconque des revendications précédentes, en ce qu'il comprend un second tapis (17) formant une boucle autour de deux seconds rouleaux (18a, 18b) agencés pour que le second tapis (17) soit disposé sensiblement parallèlement au premier tapis (8) et pour être entraînés dans un mouvement de rotation en sens inverse de celui des deux premiers rouleaux (9a, 9b).

6. Dispositif selon la revendication 1, **caractérisé en ce que** lorsque le moyen d'orientation comprend un élément d'inversion du sens de rotation de l'un au moins des deux premiers rouleaux, le dispositif comprend en outre un troisième cylindre (13) agencé pour poursuivre le laminage de la galette après le passage du pâton entre les premier et deuxième cylindres et pour être entrainé dans un mouvement de rotation par un moteur d'entraînement.

7. Dispositif selon la revendication 6, **caractérisé en ce que** ledit moteur d'entraînement est constitué du premier moteur.

## Patentansprüche

1. Vorrichtung (1) zum Formen von Teiglingen (2) aus Teigwaren mit einem Teiglingszufuhrmittel (3), mit mindestens einem ersten und zweiten Walzzylinder (4a, 4b), die im Wesentlichen parallel zueinander angeordnet und so ausgerichtet sind, dass sie in einer zueinander gegenläufigen Drehbewegung von einem ersten Drehmotor angetrieben werden, dessen Antriebsachse (5) an den ersten und zweiten Zylinder (4a, 4b) mit einer ersten Kopplungseinrichtung gekoppelt ist (6), wobei diese ersten und zweiten Zylinder (4a, 4b) derart gestaltet sind, dass sie den Teigling in einen Teigfladen (7) auswalzen; außerdem besteht die Vorrichtung aus einem ersten Langroller des Teigfladens in ein Baguette, der mit einem ersten Förderband (8) ausgestattet ist, das eine Schlaufe um die beiden ersten Wickler (9a, 9b) bildet, die im Wesentlichen parallel zum ersten und zweiten Zylinder (4a, 4b) angeordnet sind, wobei wenigstens einer der beiden ersten Wickler (9a, 9b) in einer Drehbewegung von einem zweiten Motor angetrieben wird und der erste Langroller darüber hinaus ein Walzelement (11) aufweist, das im Wesentlichen parallel zum ersten Förderband (8) in einem von ihm gewählten Abstand und zwischen letzterem und den ersten und zweiten Zylindern (4a, 4b) angeordnet ist; die Vorrichtung besteht außerdem aus einem Ausrichtungsmittel (12a, 12b) des geformten Teiglings zum Auslass der Vorrichtung, das derart beschaffen ist, dass dieser Auslass gleichermaßen möglich ist, wenn der Teigling die Form eines Teigfladens oder die Form eines Baguettes erhalten hat, **dadurch gekennzeichnet,**
**dass** entweder besagtes Ausrichtungsmittel (12b) mit einem Drehrichtungsumkehrelement von wenigstens einem der beiden Wickler (9a 9b) ausgestattet ist
oder die Vorrichtung einen dritten Zylinder (13) aufweist, der derart konstruiert ist, dass er das Walzen des Teigfladens nach dem Durchgang des Teiglings zwischen dem ersten und zweiten Zylinder fortsetzt und das Ausrichtungsmittel (12a) ein erstes Achslager (14a) und ein zweites Achslagerpaar (14b, 14c) aufweist, wobei das zweite Achslagerpaar (14, 14c) derart angeordnet ist, dass die Drehung des einen die des anderen in umgekehrter Richtung auslöst und das erste Achslager (14a) und das zweite Achslagerpaar (14b, 14c) jeweils so beschaffen sind, dass sie von einer ersten Ruhestellung (A1, A2) in eine zweite Stellung (B1, B2) bewegt werden können, in der sie die Achsendrehung (5) des ersten Motors auf den dritten Zylinder übertragen.

2. Vorrichtung nach Anspruch 1, **dadurch gekennzeichnet, dass** das erste Achslager (14a) und das zweite Achslagerpaar (14b, 14c) fest miteinander verbunden und derart angeordnet sind, dass die erste Stellung (A1, A2) des einen mit der zweiten Stellung (B1, B2) des anderen übereinstimmt.

3. Vorrichtung nach Anspruch 2, **dadurch gekennzeichnet, dass** das erste Achslager (14a) und das zweite Achslagerpaar (14b, 14c) derart angeordnet sind, dass sie jeweils von ihrer ersten (A1. A2) und in ihre zweite (B1, B2) Stellung durch Schwenken bewegt werden können.

4. Vorrichtung nach einem der Ansprüche 2 oder 3, **dadurch gekennzeichnet, dass** sie eine Auslassplatte (15) der zu Teigfladen geformten Teiglinge aufweist, die derart gestaltet ist, dass sie durch Schwenken von einer ersten im wesentlichen vertikalen Ruhestellung (C1) in eine zweite Auslassstellung (C2) besagter Teigfladen bewegt werden kann, die im wesentlichen horizontal ist, damit bei dieser Bewegung über ein zweites Kopplungsmittel (16) die Verschiebung des ersten Achslagers (14a) und des zweiten Achslagerpaars (14b, 14c) jeweils von ihrer ersten (A1, A2) in ihre zweite (B1, B2) Stellung ausgelöst wird.

5. Vorrichtung nach einem der vorhergehenden Ansprüche, **dadurch gekennzeichnet ist, dass** sie ein zweites Förderband (17) aufweist, das eine Schlaufe um die beiden zweiten Wickler (18a, 18b) bildet, die derart angeordnet sind, dass das zweite Förderband (17) im wesentlichen parallel zum ersten Förderband (8) ausgerichtet ist und sie in einer Drehbewegung in umgekehrter Richtung als die der beiden ersten Wickler (9a, 9b) angetrieben werden.

6. Vorrichtung nach Anspruch 1, **dadurch gekennzeichnet, dass** wenn das Ausrichtungsmittel ein Drehrichtungsumkehrelement von wenigsten einem der beiden Wickler aufweist, sie außerdem mit einen dritten Zylinder (13) ausgestattet ist, der so beschaffen ist, dass er das Walzen des Teigfladens nach dem Durchgang des Teiglings zwischen dem ersten und zweiten Zylinder fortsetzt und in einer Drehbewegung von einem Antriebsmotor angetrieben wird.

7. Vorrichtung nach Anspruch 6, **dadurch gekennzeichnet, dass** besagter Antriebsmotor aus dem ersten Motor besteht.

## Claims

1. Dough (1) rolling device for shaping (2) edible dough, comprising a means (3) for loading the dough on the roller within the device, with at least two cylinder (4a, 4b) rollers positioned almost parallel to each other and arranged to rotate in opposite directions of one another by a first rotary motor with a drive shaft (5) that is coupled to the first and second rollers (4a, 4b) by a first coupling system (6), the aforementioned first and second rollers (4a, 4b) are arranged to roll the dough into a flat sheet (7), the device is further comprised of a first means for rolling the flat sheet into strips, comprising a first belt (8) that form a loop on the two first rollers (9a, 9b) positioned parallel to the first and second rollers (4a, 4b), at least one of the two first rollers (9a, 9b) is driven in rotational motion by a second motor, the first driving means further comprising a rolling element (11) positioned parallel to the first belt (8) at a selected distance therefrom and between the latter and the first and second rollers (4a, 4b); the device further includes a means (12a, 12b) for directing the shaped dough to the outlet of the device, that is positioned to allow the output once the dough has been received in the form of a sheet and a strip, **characterized in that**:
either said means of directing (12b) includes an element for reversing the direction of rotation of at least one of the two first rollers (9a 9b)
or the device comprises a third cylinder (13) arranged to continue rolling the sheet after the dough passes between the first and second cylinders and the means for guiding the dough (12a) includes a first bearing (14a) and a pair of second bearings (14b, 14c), the second bearings (14, 14c) are arranged so that rotation of one causes the other one to move in the opposite direction, the first bearing (14a) and the pair of second bearings (14b, 14c) are each positioned to be moved between a respective first position (A1, A2) and a respective second position (B1, B2) in which the rotation of the axle is transmit (5) from the first motor to the third cylinder.

2. Device according to claim 1, **characterized in that** the first bearing (14a) and the pair of second bearings (14b, 14c) are integral with one another and arranged so that the first position (A1, A2) corresponds to the second position (B1, B2) of the other.

3. Device according to claim 2, **characterized in that** the first bearing (14a) and the pair of second bearings (14b, 14c) are arranged to be moved between their first (A1. A2) and second (B1, B2) respective positions by pivoting.

4. Device according to one of claims 2 or 3, **characterized in that** it includes a tray (15) at the output of the device for the dough formed into sheets, positioned to be pivoted between a first position (C1) of vertical rest and a second position (C2) where the sheets leave the device, at a horizontal position and for driving during this movement, via a second coupling system (16), moving the first bearing (14a) and the pair of second bearings (14b, 14c) between the first (A1, A2) and second (B1, B2) positions.

5. Device according to any one of the preceding claims **characterized in that** it comprises a second belt (17) looped around two second rollers (18a, 18b) arranged so that the second belt (17) is positioned parallel to the first belt (8) and for being rotated the in opposite direction of the two first rollers (9a, 9b).

6. Device according to claim 1, **characterized in that** when the means for directing the dough through the device includes an element for reversing the direction of rotation of at least the first two rollers, the device further comprises a third cylinder (13) arranged to further rolling of the sheet after passing the dough between the first and second rollers and to be sheathed in a rotational movement by a drive motor.

7. Device according to claim 6, **characterized in that** said drive motor is constituted by the first motor.
